# EUROPEAN PATENT SPECIFICATION

(11) **EP 4 262 443 B1**
(45) Date of publication and mention of the grant of the patent: **19.08.2026**
(21) Application number: 21835766.3
(22) Date of filing: 15.12.2021
(51) Int. Cl.: A23L 33/19, A23C 9/142, A23C 9/15, A23J 1/20, A23J 3/08, A23L 33/00

(54) **PROCESS FOR PRODUCING A SERUM PROTEIN CONCENTRATE ENRICHED IN IMMUNOGLOBULINS**
VERFAHREN ZUR HERSTELLUNG EINES MIT IMMUNGLOBULINEN ANGEREICHERTEN SERUMPROTEINKONZENTRATES
PROCÉDÉ DE PRODUCTION D'UN CONCENTRÉ DE PROTÉINES SÉRIQUES ENRICHI EN IMMUNOGLOBULINES

(30) Priority: 16.12.2020 EP 20214407
(43) Date of publication of application: 25.10.2023
(73) Proprietor: FrieslandCampina Nederland B.V., 3818 LE Amersfoort (NL)
(72) Inventor: LI, WeiWei, 6708 WH Wageningen (NL); DOTREMONT, Chris Thérèse Emilienne, 6708 WH Wageningen (NL); POURSAEIDESFAHANI, Ali, 6708 WH Wageningen (NL)
(74) Representative: FrieslandCampina IP Department
(86) International application number: PCT/EP2021/085827
(87) International publication number: WO 2022/129127

(56) References cited:
- US-A1- 2014 213 774
- HEIDEBRECHT HANS-JÜRGEN ET AL: "Concentration of Immunoglobulins in Microfiltration Permeates of Skim Milk: Impact of Transmembrane Pressure and Temperature on the IgG Transmission Using Different Ceramic Membrane Types and Pore Sizes", FOODS, vol. 7, no. 7, 28 June 2018 (2018-06-28), pages 101, XP055801553, DOI: 10.3390/foods7070101
- THOMAS GOSCH ET AL: "Improved isolation of bioactive components of bovine colostrum using cross-flow microfiltration", INTERNATIONAL JOURNAL OF DAIRY TECHNOLOGY, 1 January 2013 (2013-01-01), pages n/a - n/a, XP055055935, ISSN: 1364-727X, DOI: 10.1111/1471-0307.12027

## Description

The present invention relates to a process for producing a serum protein concentrate with a high immunoglobulin content.

Milk provides the sole source of nutrition for mammalian offspring until they are able to digest food from other sources. Colostrum and milk of all lactating animals contain immunoglobulins (Ig's), which provide the offspring immunological protection against microbial pathogens and toxins and protect the mammary gland against infections. The major classes of immunoglobulins in bovine and human milk are IgG, IgA, and IgM, which differ in structure and biological activity. IgG can be subdivided in IgG₁ and IgG₂.

In human milk, the major Ig is IgA. Human breast milk contains about 85-90 wt% IgA, about 2-3 wt% IgG, and about 8-10 wt% IgM (J.A. Cakebread et al., J. Agric. Food Chem., 63 (2015) 7311-7316).

In bovine milk, on the other hand, the major Ig is IgG. Mature bovine milk contains about 80 wt% IgG (the far majority being IgG₁), about 10 wt% IgM, and about 10% IgA. The Ig-content of bovine colostrum is much higher than that of mature bovine milk: 70-80% of the total protein content of colostrum are Ig's, whereas in mature bovine milk they only provide for less than 1 wt% of the total protein content.

There is a continuing desire to produce infant formula which resembles human breast milk as closely as possible. Hence, there is a desire to increase the active immunoglobulin content of infant formula in order to reach that goal.

Infant formula is generally prepared by combining milk with at least one source of whey proteins, at least one source of lipids, at least one carbohydrate source, and vitamins and minerals.

The whey protein source is preferably selected from whey protein concentrate (WPC) and serum protein concentrate (SPC). Both products are the result of separating skimmed milk into a casein-rich and a whey protein-rich fraction; either by renneting (i.e. cheese making), acidification, or microfiltration. Immunoglobulins exist in the milk serum phase, instead of the casein micelle phase, and are therefore considered whey proteins.

Whey protein concentrate (WPC) is a product obtained by ultrafiltration and/or reverse osmosis and optionally demineralization of acid or cheese whey. By ultrafiltration, a large part of the water, lactose and ash are removed from the product, thereby concentrating the whey proteins. Reverse osmosis can be used to remove water and to further concentrate the WPC.

Serum protein concentrate (SPC) is also a concentrated whey protein product and differs from WPC in the origin of the whey fraction. Instead of acid or cheese whey, the whey proteins in SPC result from microfiltration of skimmed milk. Said microfiltration results in a concentrated casein retentate fraction and a serum fraction containing most of the whey proteins as the permeate fraction. Conventionally, this permeate fraction is then subjected to ultrafiltration and/or reverse osmosis in order to remove lactose, ash, and water.

The immunoglobulin content of regular SPC is below 6 wt%, based on total serum protein. This is comparable to the content in mature bovine milk, which means that conventional SPC preparation does not lead to significant enrichment of Ig content.

The present invention relates to the provision of a serum protein concentrate with a higher immunoglobulin content than regular SPCs and a process resulting in an enrichment of total Ig content, relative to total serum protein, of a factor of at least 1.5, preferably at least 1.7, most preferably at least 2.0. The SPC according to the present invention contains 8-12 wt%, preferably 10-12 wt% immunoglobulins - i.e. IgG + IgA + IgM - based on total serum protein.

The total serum protein content is determined by determining the total protein content and subtracting the non-protein nitrogen (NPN) and casein content from the total protein content; all determined by the well-known Kjeldahl method (conversion factor 6.38).

The immunoglobulin content can be determined using the bovine IgG, IgA and IgM ELISA quantitation set as described by R.L. Valk-Weebera, T. Eshuis-de Ruiter, L. Dijkhuizen, and S.S. van Leeuwen, International Dairy Journal, Volume 110, November 2020, 104814).

It should be noted that WO 2004/094027 discloses microfiltration of milk, preferably transgenic milk containing human immunoglobulins, over a short helical hollow fibre membrane, followed by ultrafiltration (UF) using a 100 kDa membrane. The feed that is subjected to microfiltration already contained a high level of human immunoglobulins. The Ig content of mature bovine milk, as used in the process of the present invention, is, however, much lower.

US 2003/059512 discloses microfiltration of skimmed milk using a membrane with a MWCO of 100-3000 kDa, followed by filtration at 50-300 kDa, resulting in a retentate containing Ig and albumin. This document is silent on the conditions required to enrich the MF permeate in Ig content.

H.J. Heidebrecht et al, Foods 2018, 7, 101, discloses the concentration of immunoglobulins in microfiltration permeates of skim milk using different ceramic membrane types and pore sizes.

The process for producing a SPC according to the invention comprises microfiltration (MF) of a feed stream comprising mature bovine skimmed milk diluted with water in a volume ratio 0.5-1.5, using a membrane with a pore size in the range 85-200 nm, a temperature in the range 10-15°C or 50-55°C, a cross flow of 1-2.4 m/s, and a trans membrane pressure of 0.25-1 bar. An Ig-enriched SPC is obtained as the MF permeate.

Such membrane pore size and conditions allow selective permeation of immunoglobulins, especially IgG, compared to total serum protein, thereby enriching the immunoglobulin content relative to total serum protein in the MF permeate. This in contrast to a conventional milk microfiltration, where the permeation of immunoglobulins is not selective over total serum protein.

In contrast to US 2014/0213774 and T. Gosch et al., Int. J. Dairy Techn. 66 (2013) [doi 10.1111/1471-0307.12027], the present invention relates to the production of an immunoglobulin-enriched SPC starting from mature bovine milk.

Although bovine colostrum contains much more immunoglobulins than mature bovine milk, it is not an option to use bovine colostrum to produce an immunoglobulin-enriched SPC. First of all, the composition of colostrum (e.g. its high concentration of whey proteins) is such that it tends to precipitate on the surface of heat exchangers and evaporators, causing problems in their cleaning and maintenance. In addition, the use of colostrum raises ethical issues, because it deprives newly born calves of essential nutrition in the first few days of its life.

Within the context of the present invention, mature bovine milk is bovine milk other than colostrum. Colostrum is the milk in the first three days after calving. Colostrum has higher levels of fat, whey proteins (including Ig's), vitamins, and minerals and lower levels of lactose and casein than mature milk.

The SPC produced by the process according to claim 1 may comprise 8-12 wt%, preferably 10-12 wt% immunoglobulins (IgG + IgA + IgM) based on total serum protein.

The process according to the present invention involves microfiltration (MF) of mature bovine skimmed milk over a membrane with a pore size in the range 85-200 nm, preferably 85-150 nm, most preferably 90-110 nm. All conventional types of microfiltration membranes - spiral wound, ceramic, hollow fibre, etc. - can be used, although hollow fibre membranes are preferred. Any hollow fibre membrane can be used, although it is preferred to use modules with straight hollow fibres. The diameter of the hollow fibre membrane is preferably in the range 0.8-3 mm, more preferably 1.0-2.0 mm, and the length is preferably in the range 0.75-1.5 m.

The membrane can be constructed form various polymer types, such as polysulfone (PS), (modified) polyethersulfone, polyvinylidene difluoride (PVDF), polyacrylonitrile (PAN), cellulose acetate (CA), and polypropylene (PP).

Compared to conventional microfiltration membranes, such as spiral wound membranes and ceramic membranes, hollow fibre membranes allow for a higher transmission rate of immunoglobulins compared to other whey proteins, thereby resulting in a higher Ig content of the MF permeate.

Additional advantages of hollow fibre membranes are their compact system design, with low holding volume, and, as a result, lower cleaning costs. The vertical position of hollow fibre modules allows higher product recovery at the end of a production run. The mature bovine skimmed milk to be microfiltered is diluted with water in a volume ratio water/milk of 0.5-1.5, preferably 0.75-1.25, and most preferably about 1.

The trans-membrane pressure (TMP) across the membrane is in the range of 0.25-1 bar, preferably 0.5-1 bar.

The microfiltration step is conducted at a temperature either in the range 10-15°C or 50-55°C, preferably in the range 50-55°C.

The cross-flow is in the range 1-2.4 m/s, preferably 1.5-2.4.

In order to further increase the immunoglobulin yield, diafiltration is desirably conducted.

The diluted milk may be concentrated or diafiltrated at a fixed volume concentration factor (VCF).

In one embodiment, the MF permeate obtained by the process of the present invention is subjected to a further filtration, using a membrane with a molecular weight cut-off in the range 400-800 kDa, preferably 400-600 kDa, most preferably 400-500 kDa, or a pore size of 25-100 nm, preferably 50-100 nm, most preferably 50-60 nm. The resulting retentate is even further enriched in IgG content.

Prior to this further filtration, the MF permeate may be acidified to the isoelectric point of the serum protein β-lactoglobulin. In another embodiment, anion exchange chromatography may be applied to the MF retentate to selectively remove serum proteins.

The SPC resulting from the process of the present invention, which is not claimed as such, may be further concentrated, demineralized, and/or (spray)dried in order to make a powdered product. The SPC is particularly suitable for use as an ingredient in the production of a nutritional composition, in particular formula milk. The formula milk is selected from the group of infant formulas, follow-up formulas, and growing-up formulas.

The nutritional composition, in particular the formula milk, can be prepared by combining the SPC with at least a lipid source, a carbohydrate source, vitamins, and minerals.

The lipid source may be any lipid or fat suitable for use in formula milk. Preferred fat sources include milk fat, safflower oil, egg yolk lipid, canola oil, olive oil, coconut oil, palm kernel oil, soybean oil, fish oil, palm olein, high oleic sunflower oil and high oleic safflower oil, and microbial fermentation oil containing long-chain polyunsaturated fatty acids (LC-PUFA). In one embodiment, anhydrous milk fat is used. The lipid source may also be in the form of fractions derived from these oils such as palm olein, medium chain triglycerides, and esters of fatty acids such as arachidonic acid, linoleic acid, palmitic acid, stearic acid, docosahexaeonic acid, linolenic acid, oleic acid, lauric acid, capric acid, caprylic acid, caproic acid, and the like. Small amounts of oils containing high quantities of pre-formed arachidonic acid and docosahexaenoic acid, such as fish oils or microbial oils, may also be added. The fat source preferably has a ratio of n-6 to n-3 fatty acids of about 5:1 to about 15:1; for example about 8:1 to about 10:1. In a specific aspect, the infant formula comprises an oil mix comprising palmitic acid esterified to triacylglycerols; for example having 20-60 wt% of the palmitic acid on the sn-2 position and 40-80 wt% of palmitic acid on the sn-1/sn-3 position of the triacylglycerol.

Examples of vitamins and minerals that are preferably present in formula milk are vitamin A, vitamin B1, vitamin B2, vitamin B6, vitamin B12, vitamin E, vitamin K, vitamin C, vitamin D, folic acid, inositol, niacin, biotin, pantothenic acid, choline, calcium, phosphorous, iodine, iron, magnesium, copper, zinc, manganese, chloride, potassium, sodium, selenium, chromium, molybdenum, taurine, and L-carnitine. Minerals are usually added in salt form.

Examples of carbohydrates that are preferably present in formula milk are lactose, non-digestible oligosaccharides such as galacto-oligosaccharides (GOS) and/or fructo-oligosaccharides (FOS) and human milk oligosaccharides (HMOs).

If necessary, the nutritional composition may contain emulsifiers and stabilisers such as soy lecithin, citric acid esters of mono- and di-glycerides, and the like. It may also contain other substances which may have a beneficial effect such as lactoferrin, nucleotides, nucleosides, and the like.

### EXAMPLES

### Example 1

A hollow fibre membrane (0.1 µm pore size, PES) of 75 cm length and 1.5 mm fibre diameter was used in this experiment. A feed of 3.5 L pasteurized skim milk was used and was pre-mixed with 3.5 L of demi-water for diafiltration. The feed was concentrated by the hollow fibre membrane with a cross flow of 2.4 m/s and a TMP of 1 bar, at an operating temperature of 50°C. The total feed (7 L) was concentrated to a Volume Concentration Factor (VCF) of 2.8 to 2.5 L MF retentate, and the MF permeate (4.5 L) was collected as the IgG-enriched product.

The concentrations of IgG, IgA and IgM in the feed, the MF retentate, and the MF permeate were measured by ELISA and the total serum protein content was measured by the Kjeldah method. The results are displayed in Table 1.

It can be seen that the total Ig content in the MF permeate, relative to total serum protein, is about 2.5 times higher than in the feed.

**Table 1**

| | Feed | MF permeate | MF retentate |
|---|---|---|---|
| IgG [ppm] | 122.01 | 69.22 | 241.80 |
| IgA [ppm] | 11.80 | 4.29 | 42.21 |
| IgM [ppm] | 9.13 | 0.32 | 25.83 |
| Serum protein [wt%] | 0.32 | 0.06 | 1.00 |
| Total Ig relative to serum protein [wt%] | 4.48 | 11.54 | 3.08 |

### Example 2

Example 1 was repeated, except that the total feed (7 L) was filtered at a constant VCF of 1 by regular addition of demi-water; until 3.5 L demi-water were added.

Table 2 summarizes the composition of the relevant proteins in the feed, the MF permeate, and the MF retentate. It can be seen that the total Ig content in the MF permeate, relative to total serum protein, is about 1.8 times higher than in the feed.

**Table 2**

| | Feed | MF permeate | MF retentate |
|---|---|---|---|
| IgG [ppm] | 143.2 | 33.9 | 152.3 |
| IgA [ppm] | 19.3 | 2.4 | 24.6 |
| IgM [ppm] | 39.2 | 2.6 | 35.7 |
| Serum protein [wt%] | 0.33 | 0.04 | 0.41 |
| Total Ig purity in serum protein [wt%] | 6.12 | 10.81 | 5.20 |

## Claims

1. Process for producing a Serum Protein Concentrate (SPC) enriched in immunoglobulins, said process comprising microfiltration (MF) of a feed stream comprising mature bovine skimmed milk diluted with water to a water/milk volume ratio of 0.5-1.5, the microfiltration being performed using a membrane with a pore size in the range 85-200 nm, a temperature in the range 10-15°C or 50-55°C, a cross flow of 1-2.4 m/s, and a trans membrane pressure of 0.25-1 bar, thereby resulting in the Serum Protein Concentrate as the MF permeate.

2. Process according to claim 1 wherein the Serum Protein Concentrate comprises 8-12 wt%, preferably 10-12 wt% immunoglobulins based on total serum protein.

3. Process according to claim 1 or 2 wherein the membrane is a hollow fibre membrane.

4. Process according to any one of the preceding claims wherein immunoglobulin content of the Serum Protein Concentrate, relative to total serum protein, is a factor of at least 1.5, preferably at least 1.7, most preferably at least 2.0 higher than the immunoglobulin content of the mature bovine skimmed milk, relative to total serum protein.

5. Process according to any one of the preceding claims wherein the mature bovine skimmed milk to be microfiltered is diluted with water to a water/milk volume ratio of 0.75-1.25, and most preferably about 1.

6. Process according to any one of the preceding claims wherein microfiltration is conducted at a temperature in the range 50-55°C.

7. Process according to any one of the preceding claims wherein the transmembrane pressure is 0.5-1 bar.

8. Process according to any one of the preceding claims wherein the MF permeate is subjected to a further filtration using a membrane with a molecular weight cut-off in the range 400-800 kDa, preferably 400-600 kDa, most preferably 400-500 kDa, or a pore size of 25-100 nm, preferably 50-100 nm, most preferably 50-60 nm.

9. Process according to claim 8 wherein the MF permeate is acidified to the isoelectric point of β-lactoglobulin prior to said further filtration.

## Patentansprüche

1. Verfahren zum Herstellen eines mit Immunglobulinen angereicherten Serumproteinkonzentrats (SPC), wobei das Verfahren die Mikrofiltration (MF) eines Zulaufs umfasst, der reife Rinder-Magermilch umfasst, die mit Wasser auf ein Wasser/Milch-Volumenverhältnis von 0,5-1,5 verdünnt ist, wobei die Mikrofiltration unter Verwendung einer Membran mit einer Porengröße im Bereich von 85-200 nm, einer Temperatur im Bereich von 10-15 °C oder 50-55 °C, einem Querstrom von 1-2,4 m/s, und einem Transmembrandruck von 0,25-1 bar durchgeführt wird, wodurch das Serumproteinkonzentrat als MF-Permeat entsteht.

2. Verfahren nach Anspruch 1, wobei das Serumproteinkonzentrat 8-12 Gew.-%, vorzugsweise 10-12 Gew.-% Immunglobuline, bezogen auf Gesamtserumprotein, umfasst.

3. Verfahren nach Anspruch 1 oder 2, wobei es sich bei der Membran um eine Hohlfasermembran handelt.

4. Verfahren nach einem der vorhergehenden Ansprüche, wobei der Immunglobulingehalt des Serumproteinkonzentrats im Vergleich zum Gesamtserumprotein um einen Faktor von mindestens 1,5, vorzugsweise mindestens 1,7, am meisten bevorzugt mindestens 2,0 höher ist als der Immunglobulingehalt der reifen Rinder-Magermilch im Vergleich zum Gesamtserumprotein.

5. Verfahren nach einem der vorhergehenden Ansprüche, wobei die reife Rinder-Magermilch, die mikrofiltriert werden soll, mit Wasser auf ein Wasser-Milch-Volumenverhältnis von 0,75-1,25, und am meisten bevorzugt etwa 1, verdünnt wird.

6. Verfahren nach einem der vorhergehenden Ansprüche, wobei die Mikrofiltration bei einer Temperatur im Bereich von 50-55 °C erfolgt.

7. Verfahren nach einem der vorhergehenden Ansprüche, wobei der Transmembrandruck 0,5-1 bar beträgt.

8. Verfahren nach einem der vorhergehenden Ansprüche, wobei das MF-Permeat einer weiteren Filtration unter Verwendung einer Membran mit einer Molekulargewichtsgrenze im Bereich von 400-800 kDa, vorzugsweise 400-600 kDa, am meisten bevorzugt 400-500 kDa oder einer Porengröße von 25-100 nm, vorzugsweise 50-100 nm, am meisten bevorzugt 50-60 nm unterzogen wird.

9. Verfahren nach Anspruch 8, wobei das MF-Permeat vor der weiteren Filtration bis zum isoelektrischen Punkt von β-Lactoglobulin angesäuert wird.

## Revendications

1. Procédé de production d'un concentré de protéines sériques (SPC) enrichi en immunoglobulines, ledit procédé comprenant une microfiltration (MF) d'un flux d'alimentation comprenant du lait écrémé de bovin mature dilué avec de l'eau jusqu'à un rapport volumique eau/lait de 0,5-1,5, la microfiltration étant réalisée en utilisant une membrane d'une taille de pores dans la plage de 85-200 nm, une température dans la plage de 10-15 °C ou 50-55 °C, un flux transversal de 1-2,4 m/s, et une pression transmembranaire de 0,25-1 bar, conduisant ainsi au concentré de protéines sériques comme perméat MF.

2. Procédé selon la revendication 1, dans lequel le concentré de protéines sériques comprend 8-12 % en poids, de préférence 10-12 % en poids d'immunoglobulines sur la base des protéines sériques totales.

3. Procédé selon la revendication 1 ou 2, dans lequel la membrane est une membrane à fibres creuses.

4. Procédé selon l'une quelconque des revendications précédentes, dans lequel la teneur en immunoglobuline du concentré de protéines sériques, par rapport aux protéines sériques totales, est un facteur au moins 1,5, de préférence au moins 1,7, le plus préférablement au moins 2,0 plus élevée que la teneur en immunoglobuline du lait écrémé de bovin mature, par rapport aux protéines sériques totales.

5. Procédé selon l'une quelconque des revendications précédentes, dans lequel le lait écrémé de bovin mature à microfiltrer est dilué avec de l'eau jusqu'à un rapport volumique eau/lait de 0,75-1,25, et le plus préférablement d'environ 1.

6. Procédé selon l'une quelconque des revendications précédentes, dans lequel la microfiltration est effectuée à une température dans la plage de 50-55 °C.

7. Procédé selon l'une quelconque des revendications précédentes, dans lequel la pression transmembranaire est de 0,5-1 bar.

8. Procédé selon l'une quelconque des revendications précédentes, dans lequel le perméat MF est soumis à une filtration supplémentaire en utilisant une membrane ayant une coupure de poids moléculaire dans la plage de 400-800 kDa, de préférence de 400-600 kDa, le plus préférablement de 400-500 kDa, ou une taille de pores de 25-100 nm, de préférence de 50-100 nm, le plus préférablement de 50-60 nm.

9. Procédé selon la revendication 8, dans lequel le perméat MF est acidifié jusqu'au point isoélectrique de β-lactoglobuline avant ladite filtration supplémentaire.
